# EUROPEAN PATENT APPLICATION

(11) **EP 3 309 435 A1**
(43) Date of publication of application: **18.04.2018**
(21) Application number: 16193933.5
(22) Date of filing: 14.10.2016
(51) Int. Cl.: F16K 31/06, H01F 7/14

(54) **VALVE DEVICE, IN PARTICULAR FOR A VEHICLE, AS WELL AS COMPONENT FOR A VEHICLE**

(71) Applicant: Conti Temic Microelectronic GmbH, 90411 Nürnberg (DE)
(72) Inventor: Ramani Mohan, Karunya Abirami, 85051 Ingolstadt (DE)

(57) **Abstract**

The invention relates to a valve device (32), in particular for a vehicle, the valve device (32) comprising at least one coil (12) configured to be energized thereby generating a magnetic flux, at least one yoke (14) for guiding the magnetic flux and at least one armature (16) being movable, in relation to the yoke (14), from at least one first position to at least one second position to actuate at least one valve element (18) for controlling a flow of a fluid, wherein the armature (16) is movable by means of the magnetic flux; wherein the armature (16) is pivotable in relation to the yoke (14) from the first position to the second position about at least one pivot axis (34) by means of the magnetic flux.

## Description

The invention relates to a valve device, in particular for a vehicle, according to the preamble of patent claim 1 as well as a component for a vehicle.

Valve devices, in particular for vehicles such as motor vehicles, are well-known from the general prior art. Usually, such a valve device is used to control a flow of a fluid which is, for example, a liquid or a gas. The valve device comprises at least one coil which is configured to be energized thereby generating a magnetic flux. In other words, by energizing said coil electric current flows through the coil so that, by means of the coil, a magnetic flux is generated or provided.

The valve device further comprises at least one yoke configured to guide said magnetic flux. Furthermore, the valve device comprises at least one armature which is movable in relation to the yoke from at least one first position to at least one second position to actuate at least one valve element for controlling said flow of said fluid, wherein the armature is movable by means of said magnetic flux. In other words, the armature can be moved by said magnetic flux from the first position to the second position in relation to the yoke. Thus, for example, the coil, the yoke and the armature are parts of an electromagnet which is used as an actuator by means of which said valve element can be actuated, i.e. moved. For example, said valve element is a part of the valve device so that, by actuating the valve element, the flow of the fluid can be controlled, i.e. adjusted.

Usually, at least one such valve device is used in a component of a vehicle, wherein said component has at least one hydraulic or pneumatic device which can be operated by means of said fluid. For example, the valve device is used to supply said hydraulic or pneumatic device with said fluid and/or to lead the fluid away from said hydraulic or pneumatic device. For example, said hydraulic or pneumatic device is used in a seat to adjust an outer contour of the seat, wherein said outer contour is also referred to as a seat contour. For example, by supplying said hydraulic or pneumatic device with said fluid and by leading said fluid away from the hydraulic or pneumatic device the seat contour can be adjusted by a seat occupant in a need-based manner.

In this regard, for example, the hydraulic or pneumatic device is a lumbar support and/or a side support of the seat so that the lumbar support and/or side profiles or side supports of the seat can be adjusted by supplying the hydraulic or pneumatic device with said fluid and by leading away said fluid from the hydraulic or pneumatic device. Alternatively or additionally, said hydraulic or pneumatic device can provide at least one massage function by means of which said seat occupant can be massaged. For example, in order to massage the seat occupant, the fluid is alternately guided to and led away from the hydraulic or pneumatic device so as to alternately increase and decrease a volume of a at least one massage element. Hence, the valve device is used to control the flow of the fluid to and/or from the hydraulic or pneumatic device.

It is an object of the present invention to provide a valve device and a component so that a flow of a fluid can be controlled particularly advantageously by means of the valve device.

This object is solved by a valve device having the features of patent claim 1 as well as a component having the features of patent claim 10. Advantageous embodiments with expedient developments of the invention are indicated in the other patent claims.

In order to further develop a valve device of the kind indicated in the preamble of patent claim 1 in such a way that the fluid can be controlled particularly advantageously, according to the present invention, the armature is pivotable in relation to the yoke from the first position to the second position about at least one pivot axis by means of the magnetic flux. The idea behind the valve device according to the present invention is that, in conventional valve devices, the armatures are translationally movable from the respective first positions to the respective second positions. Thus, a conventional valve device is not proportional. This means the movement of the translationally movable armature is not directly proportional to the electric current flowing through the coil when energizing the coil.

However, a proportional behavior of the valve device is desirable to ensure smooth and continuous control of the flow of the fluid in response to the current applied. It has been found that such a proportional behavior of the valve device can be realized by designing the valve device in such a way that the armature is not or not only translationally movable, but pivotable in relation to the yoke from the first position to the second position. For example, by pivoting the armature in relation to the yoke from the first position to the second position about the pivot axis a gap between the armature and the yoke is closed or decreased so that, in the first position, the gap is larger than in the second position. In order to move the armature from the first position to the second position a force is exerted on the armature, wherein said force results from said magnetic flux.

In a conventional valve device said force acting on the armature is not proportional to the movement or displacement of the armature. In other words, in a conventional valve device, the decreasing gap increases the force which needs to be exerted on the armature to move the armature to the second position. Thus, in a conventional valve device, the force is not proportional to the electric current applied to and flowing through the coil. However, in the valve device according to the present invention, the force or an increase of the force is at least substantially proportional to the electric current or an increase of the electric current applied to and flowing through the coil so that an at least substantially proportional behavior of the valve device according to the present invention can be realized. Thus, a particularly smooth and continuous flow of the fluid can be realized by controlling the flow of the fluid by means of the valve device according to the present invention.

For example, said fluid is a liquid which can be used as a hydraulic medium. Preferably, said fluid is a gas such as air, in particular compressed air. Thus, said fluid can be used to operate a hydraulic or pneumatic component, wherein the component can be supplied with the fluid by means of the valve device and/or the fluid can be led away from the component by means of the valve device according to the present invention.

In an advantageous embodiment of the invention, the coil is mounted on the yoke. Thus, the magnetic flux provided or generated by means of the coil can be guided in a particularly advantageous way by means of the yoke so that the flow of the fluid can be controlled particularly advantageously.

In a further advantageous embodiment of the invention the yoke is arranged at least partially in the coil so that the magnetic flux can be guided in a particularly advantageous way. Moreover, the installation space required by the valve device can be kept particularly low.

In a further advantageous embodiment of the invention the yoke comprises an elongated first portion and an elongated second portion abutting the first portion, the second portion extending angularly in relation to the first portion. For example, the second portion extends at least substantially perpendicularly to the first portion so that, for example, the first and second portions form an L-shaped profile of the yoke. Thus, the magnetic flux can be guided particularly advantageously so that the flow of the fluid can be controlled precisely and in a need-based manner.

In a further advantageous embodiment of the invention the armature comprises an elongated first portion and an elongated second portion abutting the first portion of the armature, wherein the second portion of the armature extends angularly in relation to the first portion of the armature. Thus, a particularly advantageous behavior of the valve device according to the present invention can be realized so that the valve element can be actuated, i.e. moved by means of the armature particularly advantageously.

For example, the first portion of the armature extends at least substantially perpendicularly to the second portion of the armature, so that, for example, the first and second portions of the armature form an at least substantially L-shaped profile of the armature. Thus, the armature and, thus, the valve element can be moved particularly fast.

For example, the yoke, the coil and the armature are parts of an electromagnet which can be used as an actuator for actuating, i.e. moving said valve element. Preferably, said valve element is a part of the valve device according to the present invention.

Preferably, in the second position, the first portion of the yoke extends parallel to the first portion of the armature, and the second portion of the yoke extends parallel to the second portion of the armature. Thus, the armature can be moved, in particular controlled, particularly precisely so that the flow of the fluid can be controlled in a particularly advantageous way.

In a particularly advantageous embodiment of the invention, the pivot axis extends parallel to the longitudinal extension of the first portion or the second portion. This means the pivot axis can extend parallel to the longitudinal extension of the first portion of the yoke, the first portion of the armature, the second portion of the yoke or the second portion of the armature. Thus, the armature can be moved particularly fast and a particularly proportional behavior can be realized.

In a further advantageous embodiment of the invention the pivot axis intersects the first portion or the second portion. This means the pivot axis intersects the first portion of the yoke, the first portion of the armature, the second portion of the yoke or the second portion of the armature so that a particularly smooth control of the flow of the fluid can be realized.

Moreover, in a further advantageous embodiment of the invention, at least a portion of the armature has a varying, i.e. non-constant cross-section. Preferably, at least a major portion of the armature has a varying cross-section. Thus, a particularly smooth and proportional behavior of the valve device can be achieved.

The invention also relates to a component for a vehicle, the component comprising at least one valve device according to the present invention. Preferably, said component is a seat having, for example, at least one hydraulic or pneumatic function. For example, in order to realize said hydraulic or pneumatic function, the component, in particular the seat, comprises at least one hydraulic or pneumatic device which can be operated by said fluid being, for example, a liquid or a gas. By controlling the flow of the fluid by means of the valve device the hydraulic or pneumatic device can be supplied with the fluid and/or the fluid can be led away from the hydraulic or pneumatic device. Since an at least substantially proportional behavior of the valve device can be realized, the armature and, thus, said valve element can be moved fast, precisely and in a need-based manner so that the flow of fluid can be controlled particularly precisely. Thus, said hydraulic or pneumatic function can be realized in a particularly advantageous way.

Further advantages, features, and details of the invention derive from the following description of a preferred embodiment as well as from the drawings. The features and feature combinations previously mentioned in the description as well as features and feature combinations mentioned in the following description of the figures and/or shown in the figures alone can be employed not only in the respective indicated combination but also in any other combination or taken alone without leaving the scope of the invention.

The drawings show in:
- Fig. 1a: a schematic and sectional side view of a valve device comprising at least one armature, wherein said armature is in a first position, and wherein Fig. 1a is used to illustrate the background of the present invention;
- Fig. 1b: a schematic and sectional side view of the valve device according to Fig. 1a, wherein the armature is in a second position, and wherein Fig. 1b is used to illustrate the background of the invention;
- Fig. 1c: a diagram for illustrating a working principle of the valve device according to the Figs. 1a, b, wherein Fig. 1c is used to illustrate the background of the present invention;
- Fig. 2a: a schematic and sectional side view of a valve device according to the present invention, the valve device having at least one armature;
- Fig. 2b: a schematic perspective view of the valve device according to the present invention, wherein the armature is in its first position;
- Fig. 2c: a schematic perspective view of the valve device according to the present invention, wherein the armature is in its second position; and
- Fig. 2d: a diagram for illustrating a working principle of the valve device according to the present invention.

In the figures the same elements or elements having the same functions are indicated by the same reference signs.

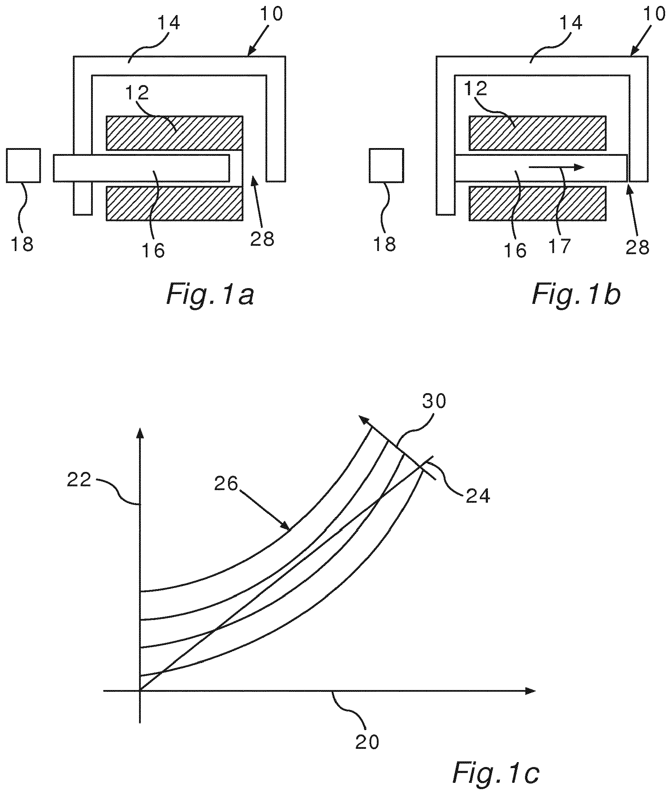

Figs. 1a, b show a valve device 10 which, for example, can be used in a component of a vehicle. For example, said component is a seat which, in a completely assembled state of the vehicle, is arranged in the interior of the vehicle which is configured as, for example, a motor vehicle, in particular a passenger vehicle such as a car. As can be seen from Figs. 1a, b the valve device 10 comprises at least one coil 12 configured to be energized thereby generating a magnetic flux. In order to energize the coil 12, an electric current is applied to the coil 12 so that the electric current flows through the coil 12. When the coil 12 is not energized, the valve device 10 is in its inactive state. When energizing the coil 12, the valve device 10 is in its activated state.

The valve device 10 further comprises at least one yoke 14 configured to guide said magnetic flux. This means the yoke 14 is used to guide the magnetic flux in a need-based manner, so that, for example, an armature 16 of the valve device 10 can be moved by means of the magnetic flux. This means the valve device 10 comprises the armature 16 which is movable in relation to the yoke 14 from at least one first position shown in Fig. 1a to at least one second position shown in Fig. 1b. As can be seen in Figs. 1a, b the armature 16 can be moved from the first position to the second position in a direction of movement which is illustrated by an arrow 17 in Fig. 1b.

Preferably, the valve device 10 further comprises at least one valve element 18 which is particularly schematically shown in Figs. 1a, b. The armature 16 is configured to actuate, i.e. move the valve element 18. In other words, by moving the armature 16 from the first position to the second position and/or from the second position to the first position the valve element 18 is actuated, i.e. moved via the armature 16. For example, the yoke 14, the coil 12 and the armature 16 are parts of an electromagnet which is used as an actuator for actuating or moving the valve element 18.

The valve element 18 is used to control a flow of a fluid which is, for example, a gas such as air, in particular compressed air. For example, said component comprises at least one duct through which said fluid can flow. Moreover, for example, the valve element 18 can be moved between a closed position and at least one open position. In said closed position at least a portion of said duct is covered and, thus, closed by the valve element 18. Preferably, in the closed position, the duct is closed and, thus, fluidically blocked by means of the valve element 18. However, in the open position, the valve element 18 uncovers said portion and, thus, said duct so that said fluid can flow through the uncovered portion and, thus, through the duct.
Hence, by moving the valve element 18 from the closed position to the open position and vice versa, the flow of the fluid through the duct can be controlled. In order to move the valve element between the closed position and the open position, the armature 16 is moved between the first and second positions.

For example, said component has at least one pneumatic device which can be operated by said fluid. Preferably, the valve device 10 is used as a valve by means of which the pneumatic device can be supplied with the fluid and/or the fluid can be led away from the pneumatic device. For example, the pneumatic device comprises at least one element into which the fluid can be introduced thereby increasing the volume of said element. In other words, said element can be inflated by introducing the fluid into the element. By discharging the fluid from the element the volume of the element can be decreased. Thus, for example, the valve device 10 is used to supply said element with the fluid and/or discharge the fluid from the element.

For example, said component is a seat having an outer contour which is also referred to as a seat contour. By introducing the fluid into the element and by discharging the fluid from the element said seat contour can be adjusted so that, for example, a seat occupant can adjust the seat contour in a need-based manner. For example, the element is a part of a lumbar support and/or a lateral support so that a support function of lumbar support and/or the lateral support can be adjusted by introducing the fluid into the element and discharging the fluid from the element. Alternatively or additionally, the pneumatic device and the fluid are used to realize a massaging function of the seat. In this regard, for example, the element is a bubble or cushion which can be inflated by introducing the fluid into the bubble and deflated by discharging the fluid from the bubble. By alternately inflating and deflating the bubble a massaging function can be realized so that the seat occupant can be massaged. This means the flow of said compressed air into and away from the cushion can be controlled by the valve device 10 acting as an electromagnetic valve to provide a massaging function and/or a seat contour adjustment and/or other relevant functionalities.

In order to realize a particularly advantageous pneumatic function by means of the fluid and the pneumatic device, a particularly smooth and continuous flow of said fluid is desirable. In order to realize such a smooth and continuous flow a proportional behavior of the valve device 10 is desirable. However, the valve device 10 shown in Figs. 1a, b does not have such a proportional behavior since, as can be seen in Figs. 1a, b, the armature 16 is translationally movable between the first and second positions in relation to the yoke 14.

For example, the first position of the armature 16 corresponds to the closed position of the valve element 18, so that, by moving the armature 16 to the first position, the valve element 18 is moved to the closed position. Moreover, for example, the second position of the armature 16 corresponds to the open position of the valve element 18, so that, for example, by moving the armature 16 to the second position the valve element 18 is moved to the open position.

Moreover, for example, the valve device 10 can comprise at least one spring which is not shown in the figures. Said spring is, for example, loaded in the second position of the armature 16 so that this spring provides a spring force when the armature 16 is in the second position. Said spring force acts on the armature 16, wherein the armature 16 can be held in the second position by means of the magnetic flux against said spring force. By stopping energizing the coil 12, said spring can relax at least partially so that, by means of said spring force, the armature 16 is moved from the second position to the first position. Thus, for example, when the coil 12 is not energized, the valve device 10 is closed, i.e. the valve element 18 is in its closed position so that the valve device 10 can be configured as a normally closed valve. In a further embodiment, the first position of the armature 16 can correspond to the open position of the valve element 18, and the second position of the armature 16 can correspond to the closed position of the valve element 18 so that the valve device 10 is open when not energizing the coil 12. Thus, the valve device 10 can be configured as a normally open valve

The non-proportional behavior of the valve device 10 shown in Figs. 1a, b is illustrated by a diagram shown in Fig. 1c. The abscissa 20 of said diagram shows the movement and, thus, the displacement of the armature 16, wherein the ordinate 22 shows a force acting on the armature 16 when energizing the coil 12, wherein said force is effected by means of said magnetic flux. Said force is used to move the armature 16.

In Fig. 1c, a graph 24 illustrates the spring curve of said spring. In other words, the graph 24 illustrates said spring force exerted on the armature 16by said spring. Moreover, in Fig. 1c, graphs 26 illustrate said force effected by the magnetic flux, said force acting on the armature 16 to move the armature 16 from the first position to the second position. Moreover, as can be seen from Figs. 1a, b, by moving the armature 16 from the first position to the second position a gap 28 between the armature 16 and the yoke 14 is closed or at least decreased so that, in the first position, the gap 28 is larger than in the second position. Moreover, in Fig. 1c, an arrow 30 illustrates an increase in said electric current flowing through the coil 12. As can be seen from Fig. 1c, the valve device 10 shown in Figs. 1a, b, is not proportional. This means the movement or displacement of the armature 16 is not directly proportional to the electric current applied to and flowing through the coil 12. This means, for an applied electric current, the resulting force acting on the armature 16 is not proportional to the displacement of the armature 16. In other words, the decreasing gap 28 increases the force that needs to be exerted on the armature 16 to move the armature 16 to the second position. However, a proportional behavior of the valve device 10 is desirable to ensure smooth and continuous flow of said fluid in response to the current apply. Thus, an increase of the force should be proportional to an increase of the current applied. However, with the design shown in Figs. 1a, b, a proportional behavior cannot be achieved.

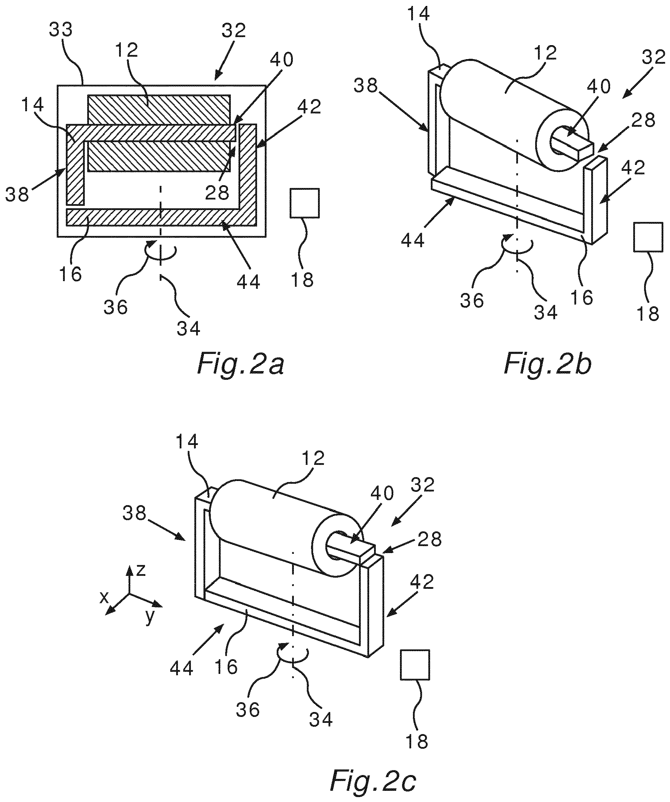

Figs. 2a-c show a valve device 32 by means of which the flow of said fluid can be controlled particularly advantageously since an at least substantially proportional behavior of the valve device 32 can be realized. For example, the valve device 32 comprises a housing 33, wherein the coil 12, the yoke 14 and the armature 16 are arranged inside said housing 33. Fig. 2b shows the inactive state of the valve device 10. Thus, when the coil 12 is not energized so that no electric current is flowing through the coil 12, the armature 16 is positioned in the first position by means of said spring or another mechanism.

When energizing the coil 12, the valve device 10 comes in its active state shown in Fig. 2c so that the armature aligns itself to the yoke 14 to create an at least substantially closed magnetic field according to the Gauss law of magnetism with minimum reluctance as possible. As can be seen from Figs. 2a-c, the armature 16 is pivotable in relation to the yoke 14 from the first position to the second position about at least one pivot axis 34 by means of the magnetic flux. Thus, by energizing the coil 12, the armature 16 executes a rotational movement about the pivot axis 34 thereby rotating from the first position to the second position, wherein said rotation movement is illustrated by an arrow 36. When stopping energizing the coil 12, the armature 16 is rotated from the second position back to the first position by means of, for example, said spring force.

In Fig. 2c, three perpendicular axes x, y and z are shown. In the embodiment shown in Figs. 2a-c, the pivot axis 34 extends perpendicularly to a plane held by the x-axis and the y-axis, wherein said plane is also referred to as x-y-plane. Alternatively, the pivot axis 34 can extend perpendicularly to a plane held by the y-axis and the z-axis or a plane held by the x-axis and the z-axis.

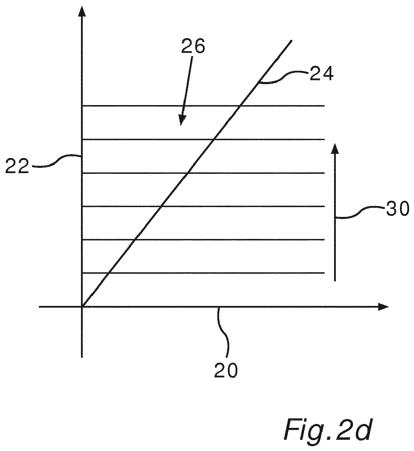

Fig. 2d shows a diagram for illustrating a working principle of the valve device 32. As can be seen from Fig. 2d, the valve device 32 has an at least substantially proportional behavior so that a particularly smooth and continuous control of the flow of the fluid can be realized.

Moreover, the coil 12 is mounted on the yoke 14, wherein the yoke 14 is arranged at least partially in the coil 12. Furthermore, the yoke 14 comprises an elongated first portion 38 and an elongated second portion 40 abutting the first portion 38, wherein the second portion 40 extends angularly, in particular perpendicularly, in relation to the first portion 38. As can be seen from Figs. 2a-c, the first and second portions 38 and 40 of the yoke 14 form an at least substantially L-shaped profile of the yoke 14.

Additionally, the armature 16 comprises an elongated first portion 42 and an elongated second portion 44 abutting the first portion 42, wherein the second portion 44 extends angularly, in particular perpendicularly, to the first portion 42. Moreover, the first and second portions 42 and 44 of the armature 16 form an at least substantially L-shaped profile of the armature 16. In this regard, the pivot axis 34 being an axis of rotation extends parallel to the longitudinal extension of the respective first portions 38 and 42. Additionally, the pivot axis 34 intersects the second portion 44 of the armature 16. Preferably, at least a portion of the armature 16 has a varying cross-section so that a particularly smooth and proportional behavior of the valve device 10 can be realized.

### Reference signs

- 10: valve device
- 12: coil
- 14: yoke
- 16: armature
- 17: arrow
- 18: valve element
- 20: abscissa
- 22: ordinate
- 24: graph
- 26: graph
- 28: gap
- 30: arrow
- 32: valve device
- 33: housing
- 34: pivot axis
- 36: arrow
- 38: first portion
- 40: second portion
- 42: first portion
- 44: second portion
- x: axis
- y: axis
- z: axis

## Claims

1. A valve device (32), in particular for a vehicle, the valve device (32) comprising:
- at least one coil (12) configured to be energized thereby generating a magnetic flux;
- at least one yoke (14) for guiding the magnetic flux; and
- at least one armature (16) being movable, in relation to the yoke (14), from at least one first position to at least one second position to actuate at least one valve element (18) for controlling a flow of a fluid, wherein the armature (16) is movable by means of the magnetic flux;
wherein the armature (16) is pivotable in relation to the yoke (14) from the first position to the second position about at least one pivot axis (34) by means of the magnetic flux.

2. The valve device (32) according to claim 1,
**characterized in that**
the coil (12) is mounted on the yoke (14).

3. The valve device (32) according to claim 2,
**characterized in that**
the yoke (14) is arranged at least partially in the coil (12).

4. The valve device (32) according to any one of the preceding claims,
**characterized in that**
the yoke (14) comprises an elongated first portion (38) and an elongated second portion (40) abutting the first portion (38), the second portion (40) extending angularly in relation to the first portion (38).

5. The valve device (32) according to any one of the preceding claims,
**characterized in that**
the armature (16) comprises an elongated first portion (42) and an elongated second portion (44) abutting the first portion (42) of the armature (16), the second portion (44) of the armature (16) extending angularly in relation to the first portion (42) of the armature (16).

6. The valve device (32) according to claims 4 and 5,
**characterized in that**
in the second position, the first portion (38) of the yoke (14) extends parallel to the first portion (42) of the armature (16), and the second portion (40) of the yoke (14) extends parallel to the second portion (44) of the armature (16).

7. The valve device (32) according to any one claims 4 to 6,
**characterized in that**
the pivot axis (34) extends parallel to the longitudinal extension of the first portion (38, 42) or the second portion (40, 44).

8. The valve device (32) according to any one claims 4 to 7,
**characterized in that**
the pivot axis (34) intersects the first portion (38, 42) or the second portion (40, 44).

9. The valve device (32) according to any one of the preceding claims,
**characterized in that**
at least a portion of the armature (16) has a varying cross-section.

10. A component, in particular a seat, for a vehicle, the component comprising at least one valve device (32) according to any one of the preceding claims.
